# EUROPEAN PATENT APPLICATION

(11) **EP 3 249 259 A1**
(43) Date of publication of application: **29.11.2017**
(21) Application number: 16740233.8
(22) Date of filing: 20.01.2016
(51) Int. Cl.: F16G 13/20, B25J 18/02, F16H 19/02, F16H 19/04

(54) **COUPLING SEGMENT, DIRECT-ACTING EXTENSION/RETRACTION MECHANISM, AND ROBOT ARM MECHANISM**

(30) Priority: 24.01.2015 JP 2015011866
(71) Applicant: Life Robotics Inc., Koto-ku Tokyo 135-0047 (JP)
(72) Inventor: YOON Woo-Keun, Tokyo 135-0047 (JP); SANO Hikaru, Tokyo 135-0047 (JP); KURIHARA Shinji, Tokyo 135-0047 (JP)
(74) Representative: Herrero & Asociados, S.L.
(86) International application number: PCT/JP2016/051625
(87) International publication number: WO 2016/117626

(57) **Abstract**

A linear extension and retraction mechanism includes a first connection piece string (21) made up of a plurality of first connection pieces (23); a second connection piece string (22) made up of a plurality of second connection pieces (24); a linear gear (239) made up of a plurality of teeth (240) and provided on a back face of each of the first connection piece (23); an ejection section (30) adapted to support a columnar body formed by joining together the first and second connection piece strings (21 and 22) and; and a drive gear (50) adapted to be meshed with the linear gears (239), wherein gear-end teeth (240f and 240e) located adjacent to each other across a junction between adjacent first connection piece string (21) are provided in such a way as not to overlap each other when viewed along a center axis of the columnar body.

## Description

### FIELD

Embodiments described herein relate generally to a connection piece, linear extension and retraction mechanism, and robot arm mechanism

### BACKGROUND

Conventionally, articulated robot arm mechanisms are used in an industrial robot and various other fields. Some of such articulated robot arm mechanisms are equipped with a linear extension and retraction mechanism. The linear extension and retraction mechanism includes a plurality of connection pieces coupled together, for example, bendably in a row. When an arm is extended, the plurality of connection pieces thus far housed in a support body is sent out as a columnar body having a certain degree of rigidity with bending of the connection pieces being constrained. On the other hand, when the arm is retracted, the columnar body is pulled back to be stored, becoming bendable with the constraints on the bending being relaxed in the support body.

### BRIEF SUMMARY OF INVENTION

A purpose of the present invention is to improve movement characteristics of an arm in a linear extension and retraction mechanism.

A linear extension and retraction mechanism according to an embodiment of the present invention includes: a first connection piece string, the first connection piece string being made up of a plurality of first connection pieces coupled together bendably in a row, a linear gear made up of a plurality of teeth arranged in a row being provided on a back face of each of the first connection piece; a second connection piece string, the second connection piece string being made up of a plurality of second connection pieces coupled together bendably in a row, a foremost one of the plurality of second connection pieces being connected with a foremost one of the plurality of first connection pieces, the first and second connection piece strings being joined with each other to constrain bending, thereby a columnar body being formed, the columnar body being relaxed when the first and second connection piece strings are separated from each other; an ejection section adapted to form the columnar body by joining together the first and second connection piece strings and support the columnar body; and a drive gear adapted to be meshed with the linear gears, wherein gear-end teeth located adjacent to each other across a junction between adjacent first connection pieces are provided in such a way as not to overlap each other when viewed along a center axis of the columnar body.

### BRIEF DESCRIPTION OF THE VIEWS OF THE DRAWING

FIG. 1 is an external perspective view of a robot arm mechanism according to an embodiment of the present invention;
FIG. 2 is a diagram showing the robot arm mechanism of FIG. 1 using graphic symbol representation;
FIG. 3 is a side view of the robot arm mechanism of FIG. 1;
FIG. 4 is a side view showing a structure of a first connection piece of the robot arm mechanism according to the present embodiment;
FIG. 5 is a perspective view showing a rear structure of the first connection piece shown in FIG. 4;
FIG. 6 is a perspective view showing a front structure of the first connection piece shown in FIG. 4;
FIG. 7 is a diagram showing a characteristic structure of an inner surface of the first connection piece shown in FIG. 4;
FIG. 8 is a side view showing a structure of a second connection piece of the robot arm mechanism according to the present embodiment;
FIG. 9 is a perspective view showing a rear structure of the second connection piece shown in FIG. 8;
FIG. 10 is a perspective view showing a front structure of the second connection piece shown in FIG. 8;
FIG. 11 is a perspective view showing a structure of an arm section of the robot arm mechanism according to the present embodiment;
FIG. 12 is a perspective view showing a characteristic structure of linear gears on a first connection piece string of the robot arm mechanism according to the present embodiment;
FIGs. 13A to 13C are side views showing postures of the first connection piece string of FIG. 12 before and after bending;
FIG. 14 is a perspective view of the first connection piece string showing a structure of a first variation of the linear gears of FIG. 12;
FIG. 15 is a perspective view of the first connection piece string showing a structure of a second variation of the linear gears of FIG. 12;
FIG. 16 is a perspective view of the first connection piece string showing a structure of a third variation of the linear gears of FIG. 12;
FIG. 17 is a perspective view of the first connection piece string showing a structure of a fourth variation of the linear gears of FIG. 12;
FIG. 18 is a perspective view of the first connection piece string showing a structure of a fifth variation of the linear gears of FIG. 12; and
FIG. 19 is a perspective view of the first connection piece string showing a structure of a sixth variation of the linear gears of FIG. 12.

### DETAILED DESCRIPTION

A linear extension and retraction mechanism according to an embodiment of the present invention is described below with reference to the drawings. Note that the linear extension and retraction mechanism according to the present embodiment can be used as an independent system (joint). However, in the following description, the linear extension and retraction mechanism according to the present embodiment is described by taking as an example an articulated robot arm mechanism incorporating the linear extension and retraction mechanism according to the present embodiment. In the following description, components having a substantially same function and configuration are denoted by the same reference numerals, and redundant description thereof will be omitted unless necessary.

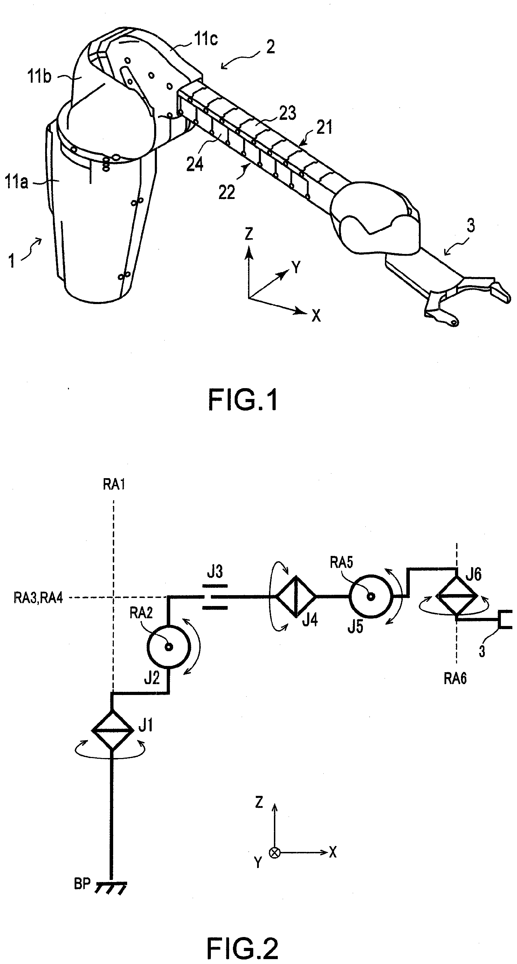

FIG. 1 is an external perspective view of a robot arm mechanism according to the present embodiment. FIG. 2 is a diagram showing the robot arm mechanism of FIG. 1 using graphic symbol representation. The robot arm mechanism includes a base 1 substantially cylindrical in shape and an arm section 2 connected to the base 1. An end effector 3 is attached to a tip of the arm section 2. A hand section capable of gripping an object is illustrated in FIG. 1 as the end effector 3. The end effector 3 is not limited to the hand section and may be another tool, a camera, or a display. An adaptor may be attached to the tip of the arm section 2 to allow the end effector 3 to be replaced with any type of end effector 3.

The arm section 2 has a plurality of--six herein--joints J1, J2, J3, J4, J5, and J6. The plurality of joints J1, J2, J3, J4, J5, and J6 are arranged in order from the base 1. Generally, first, second, and third joints J1, J2, and J3 are called root three axes, and fourth, fifth, and sixth joints J4, J5, and J6 are called wrist three axes and adapted to change a posture of a hand section 3. At least one of the joints J1, J2, and J3 constituting the root three axes is a linear motion joint. Here, the third joint J3 is a linear motion joint and is configured to be a joint with a relatively long extension distance, in particular.

The first joint J1 is a torsion joint that turns on the first axis of rotation RA1 supported, for example, perpendicularly to a base plane. The second joint J2 is a bending joint (revolute joint) that turns on the second axis of rotation RA2 perpendicular to the first axis of rotation RA1. The third joint J3 extends and retracts linearly along the third axis (axis of linear movement) RA3 perpendicular to the second axis of rotation RA2. The fourth joint J4 is a torsion joint (revolute joint) that turns on the fourth axis of rotation RA4 which matches the third axis of movement RA3. The fifth joint J5 is a bending joint that turns on the fifth axis of rotation RA5 orthogonal to the fourth axis of rotation RA4. The sixth joint J6 is a bending joint that turns on the sixth axis of rotation RA6 orthogonal to the fourth axis of rotation RA4 and perpendicular to the fifth axis of rotation RA5.

The arm support body (first support body) 11a forming the base 1 has a cylindrical hollow structure formed around the axis of rotation RA1 of the first joint J1. The first joint J1 is mounted on a fixed base (not shown). When the first joint J1 rotates, the first support body 11a axially rotates along with the turn of the arm section 2. Note that the first support body 11a may be fixed on a ground plane. In this case, the arm section 2 turns independently of the first support body 11a. The second support body 11b is connected to the upper part of the first support body 11a.

The second support body 11b has a hollow structure continuous with the first support body 11a. One end of the second support body 11b is attached to a rotating section of the first joint J1. The other end of the second support body 11b is open, and a third support body 11c is fitted therein pivotally on the axis of rotation RA2 of the second joint J2. The third support body 11c has a hollow structure made up of a scaly sheath communicating with the first support body 11a and the second support body 11b. Along with bending rotation of the second joint J2, a rear part of the third support body 11c is housed in and sent out from the second support body 11b. The rear part of the third joint J3, which constitutes a linear motion joint of the arm section 2, is housed inside the continuous hollow structure of the first support body 11a and the second support body 11b by retraction thereof.

The arm support body (first support body) 11a forming the base 1 has a cylindrical hollow structure formed around the axis of rotation RA1 of the first joint J1. The first joint J1 is mounted on a fixed base (not shown). When the first joint J1 rotates, the first support body 11a axially rotates along with the turn of the arm section 2. Note that the first support body 11a may be fixed on a ground plane. In this case, the arm section 2 turns independently of the first support body 11a. The second support body 11b is connected to the upper part of the first support body 11a.

A lower part of a rear end of the third support body 11c is fitted in a lower part of an open end of the second support body 11b pivotally on the axis of rotation RA2. Consequently, the second joint J2 is configured as a bending joint that turns on the axis of rotation RA2. When the second joint J2 pivots, the arm section 2 pivots vertically, i.e., pivots up and down, on the axis of rotation RA2 of the second joint J2 together with the hand section 3.

The fourth joint J4 is a torsion joint having the axis of rotation RA4 which typically matches a center axis of the arm section 2 along an extension and retraction direction of the arm section 2, that is, the axis of movement RA3 of the third joint J3. When the fourth joint J4 rotates, the hand section 3 rotates on the axis of rotation RA4 from the fourth joint J4 to the tip thereof. The fifth joint J5 is a bending joint having the axis of rotation RA5 orthogonal to the axis of movement RA4 of the fourth joint J4. When the fifth joint rotates, the hand section 3 pivots up and down from the fifth joint J5 to its tip. The sixth joint J6 is a bending joint having an axis of rotation RA6 orthogonal to the axis of rotation RA4 of the fourth joint J4 and perpendicular to the axis of rotation RA5 of the fifth joint J5. When the sixth joint J6 rotates, the hand section 3 swings left and right.

As described above, the third joint J3 serving as a joint section is a main constituent of the arm section 2. The hand section 3 provided at the tip of the arm section 2 is moved to a given position by the first joint J1, the second joint J2 and the third joint J3, and placed in a given posture by the fourth joint J4, the fifth joint J5 and the sixth joint J6. In particular, a linear extension and retraction distance of the third joint J3 enables the hand section 3 to reach object in a wide range from a position close to the base 1 to a position far from the base 1. The third joint J3 is characterized by the linear extension and retraction distance realized by the linear extension and retraction mechanism constituting the third joint J3.

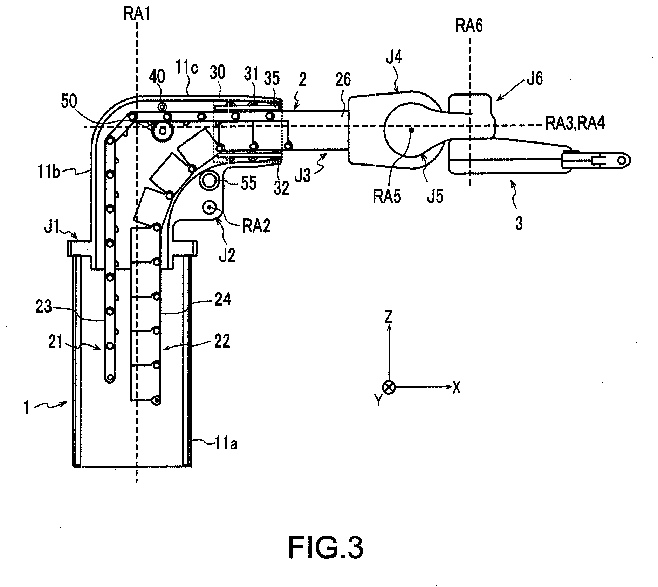

FIG. 3 is a side view of the robot arm mechanism of FIG. 1. As shown in FIG. 3, the linear extension and retraction mechanism includes a first connection piece string 21 and a second connection piece string 22. The first connection piece string 21 is made up of a plurality of first connection pieces 23. Each pair of successive first connection pieces 23 are bendably coupled together at ends by a pin, forming a string. The first connection piece string 21 can freely bend inward and outward.

The second connection piece string 22 is made up of a plurality of second connection pieces 24. Each pair of successive second connection pieces 24 are bendably coupled together at ends on bottom faces by a pin, forming a string. The second connection piece string 22 can bend inward. Each second connection piece 24 has a U-shaped cross section, and thus the second connection piece string 22 does not bend outward with side plates of adjacent second connection pieces 24 hitting each other. Note that a surface of the first connection piece 23 (second connection piece 24) which faces the second axis of rotation RA2 will be referred to as an inner surface and a surface on an opposite side will be referred to as an outer surface.

The leading first connection piece 23 of the first connection piece string 21 and the leading second connection piece 24 of the second connection piece string 22 are connected with each other by a head piece 26. For example, the head piece 26 has a combined shape of the second connection piece 24 and the first connection piece 23.

When the arm extends, the first and second connection piece strings 21 and 22 are sent outward through an opening in the third support body 11c with the head piece 26 serving as a leading piece. The first and second connection piece strings 21 and 22 are joined with each other in the ejection section 30 mounted near an opening in the third support body 11c. When the first and second connection piece strings 21 and 22 are kept joined, the first and second connection piece strings 21 and 22 constrain each other from bending. Consequently, the first and second connection piece strings 21 and 22 constitute a columnar body having a certain degree of rigidity. The columnar body is a columnar rod body made up of the first connection piece string 21 joined to the second connection piece string 22. The columnar body is generally formed into a tubular body having any of various cross sectional shape by a combination of the second connection piece 24 and the first connection piece 23. The tubular body is defined as a shape surrounded by a top plate, a bottom plate, and side plates on top, bottom, and left and right sides, respectively, with a front end portion and a rear end portion being left open.

When the arm retracts, the first and second connection piece strings 21 and 22 are pulled back to the opening in the third support body 11c. The joined first and second connection piece strings 21 and 22 are separated from each other behind the ejection section 30. Each of the separated first and second connection piece strings 21 and 22 is returned to a bendable state, bent individually, and stored in the first support body 11a.

As shown in FIG. 3, the first connection piece string 21 and the second connection piece string 22 are joined with each other in the ejection section 30 mounted near an opening in the third support body 11c.

The ejection section 30 is made up of a plurality of upper rollers 31 and a plurality of lower rollers 32, which are supported by a frame 35 of a rectangular tubular shape. For example, the plurality of upper rollers 31 are arranged along a center axis of the arm at intervals substantially equivalent to the length of the first connection piece 23. Similarly, the plurality of lower rollers 32 are arranged along the center axis of the arm at intervals substantially equivalent to the length of the second connection piece 24. Behind the ejection section 30, a guide roller 40 and a drive gear 50 are provided, facing each other across the first connection piece string 21. The drive gear 50 is connected to a motor 55 via a speed reducer (not shown). On the inner surface of each first connection piece 23, a linear gear 239 is formed along a coupling direction. When the plurality of first connection pieces 23 are lined up linearly, the respective linear gears 239 are connected linearly, making up a long linear gear. The drive gear 50 is meshed with the unified linear gear. The linearly connected linear gears 239 make up a rack-and-pinion mechanism in conjunction with the drive gear 50.

When the arm is extended, the motor 55 operates and the drive gear 50 rotates forward, causing the first connection piece string 21 to be guided by the guide roller 40 to between the upper rollers 31 and the lower rollers 32 in a posture parallel to the center axis of the arm. Along with the movement of the first connection piece string 21, the second connection piece string 22 is guided by a guide rail (not shown) placed behind the ejection section 30, to between the upper rollers 31 and the lower rollers 32 of the ejection section 30. Using the upper rollers 31 and the lower rollers 32, the ejection section 30 presses the first connection piece string 21 and the second connection piece string 22 against each other, thereby forming the columnar body, and supports the columnar body from above, below, left, and right. The columnar body formed by joining together the first connection piece string 21 and the second connection piece string 22 is sent out linearly along the third axis of movement RA3.

When the arm is retracted, the motor 55 operates and the drive gear 50 rotates backward, causing the first connection piece string 21 engaged with the drive gear 50 to be pulled back into the first support body 11a. Along with the movement of the first connection piece string, the columnar body is pulled back into the third support body 11c. The columnar body pulled back is separated at a location behind the ejection section 30. For example, the first connection piece string 21 making up the columnar body is sandwiched between the guide roller 40 and the drive gear 50 while the second connection piece string 22 making up the columnar body is pulled downward by gravity, and consequently, the second connection piece string 22 and the first connection piece string 21 are separated from each other. The separated second connection piece string 22 and first connection piece string 21 are stored in the first support body 11a.

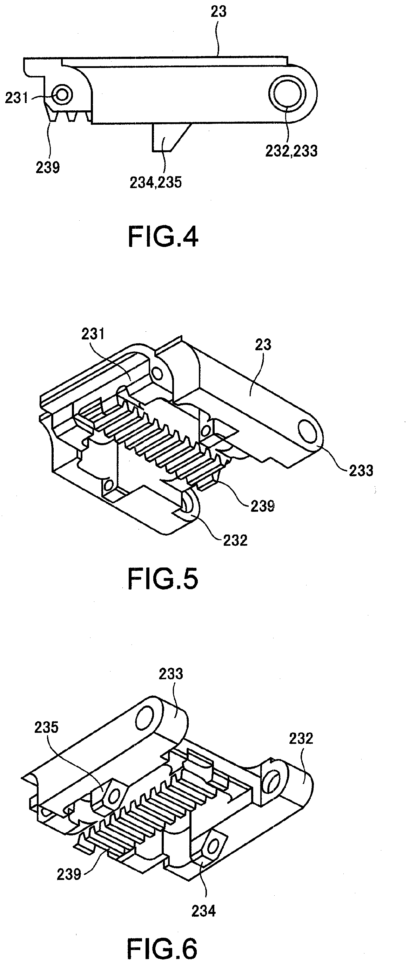

A structure of the arm section 2 of the robot arm mechanism according to the present embodiment is described below with reference to FIGs. 4 to 13C. First, a structure of the first connection pieces 23 making up the first connection piece string 21 is described below with reference to FIGs. 4 to 7.

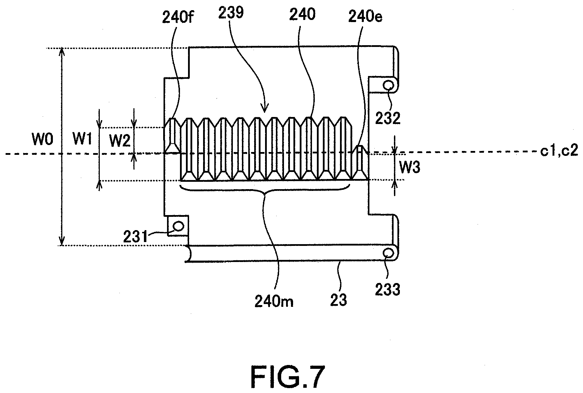

FIG. 4 is a side view showing the structure of the first connection piece 23 of the robot arm mechanism according to the present embodiment. FIG. 5 is a perspective view showing a rear structure of the first connection piece 23 shown in FIG. 4. FIG. 6 is a perspective view showing a front structure of the first connection piece 23 shown in FIG. 4. FIG. 7 is a perspective view showing a characteristic structure of the inner surface of the first connection piece 23 shown in FIG. 4.

Each of the first connection pieces 23 is formed into a substantially flat plate shape. A pinhole case 231 is provided in a center of a rear part of the first connection piece 23. Pinhole cases 232 and 233 are provided on opposite sides in a front part of the first connection piece 23. A pinhole in each of the pinhole cases 231, 232, and 233 is formed in parallel to a width direction of the first connection piece 23. The pinhole cases 232 and 233 are provided at opposite ends in the width direction, being separated from each other by a distance substantially equivalent to a width of the pinhole case 231. The pinhole case 231 in the rear part of the preceding first connection piece 23 is inserted between the pinhole cases 232 and 233. In this state, the pinholes in the pinhole cases 232 and 233 and the pinhole in the pinhole case 231 in the rear part of the preceding first connection piece 23 are connected continuously. A single pin is inserted into the pinholes connected continuously. In this way, the plurality of first connection pieces 23 are coupled together in a row, making up the first connection piece string 21. Each pair of successive first connection pieces 23 can rotate relative to each other around the pinholes. This allows the first connection piece string 21 to bend. A bending angle of the first connection piece string 21 can be restricted by a cross sectional shape of the first connection pieces 23, positions of the pinholes, shapes of the pinhole cases 231, 232, and 233, and the like. For example, the first connection piece string 21 may be configured to be bendable inward, but unbendable outward.

In a center of an inner surface (back face) of the first connection piece 23, the linear gear 239 is formed along a center axis of the first connection piece 23. Details of the linear gear 239 will be described later. Pinhole blocks 234 and 235 each having a trapezoidal cross section are provided, respectively, at centers on opposite sides of the linear gear 239. A lock pinhole is formed in each of the pinhole blocks 234 and 235.

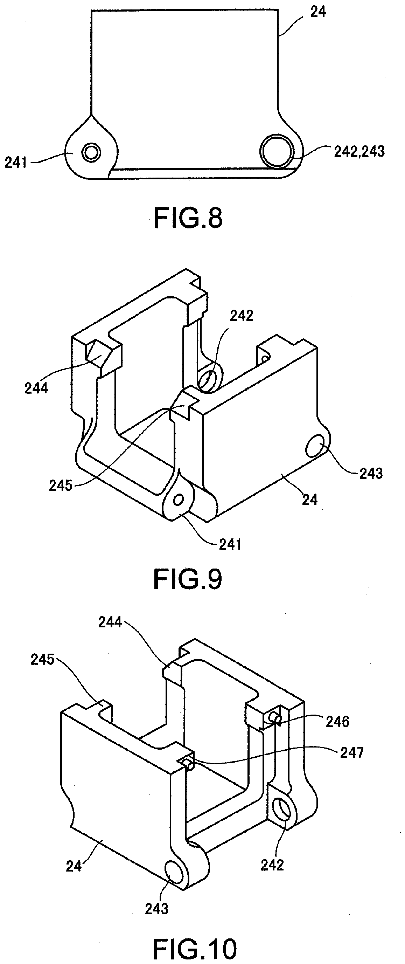

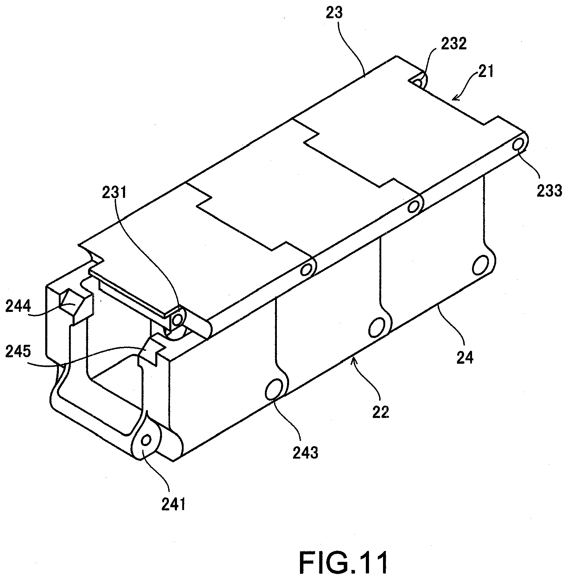

Next, a structure of the second connection pieces 24 making up the second connection piece string 22 is described with reference to FIGs. 8 to 10. Also, a joined state of the first connection piece string 21 and the second connection piece string 22 is described with reference to FIG. 11. FIG. 8 is a side view showing a structure of the second connection piece 24 of the robot arm mechanism according to the present embodiment. FIG. 9 is a perspective view showing a rear structure of the second connection piece 24 shown in FIG. 8. FIG. 10 is a perspective view showing a front structure of the second connection piece 24 shown in FIG. 8. FIG. 11 is a perspective view showing a structure of the arm section 2 of the robot arm mechanism according to the present embodiment.

A pinhole case 241 is provided in a center of a rear part of the second connection piece 24. Pinhole cases 242 and 243 are provided on opposite sides in a front part of the second connection piece 24. A pinhole in each of the pinhole cases 241, 242, and 243 is formed in parallel to a width direction of the second connection piece 24. The pinhole cases 242 and 243 are provided at opposite ends in the width direction, being separated from each other by a distance substantially equivalent to a width of the pinhole case 241 in the rear part. The pinhole case 241 in the rear part of the preceding second connection piece 24 is inserted between the pinhole cases 242 and 243 in the front part. In this state, the pinholes in the pinhole cases 242 and 243 in the front part and the pinhole in the pinhole case 241 in the rear part of the preceding second connection piece 24 are connected continuously. A single pin is inserted into the pinholes connected continuously. In this way, the plurality of second connection pieces 24 are coupled together in a row, making up the second connection piece string 22. Each pair of successive second connection pieces 24 can rotate relative to each other around the pinholes. This allows the second connection piece string 22 to bend inward and outward. A bending angle of the second connection piece string 22 can be restricted by a cross sectional shape, positions of the pinholes, shapes of the pinhole cases 241, 242, and 243, and the like. For example, the second connection piece string 22 is configured to be bendable inward, but unbendable outward.

Chuck blocks 244 and 245 are formed, respectively, in upper parts of the opposite side plates at a rear end of the second connection piece 24. Lock pin blocks 246 and 247 are formed, respectively, in upper parts of the opposite side plates at a front end of the second connection piece 24. The lock pin blocks 246 and 247 have lock pins which are inserted in the pinholes in the respective pinhole blocks 234 and 235 described above. The lock pins have center axes parallel to a length direction of the second connection piece 24. A shape and shaft length of the lock pins can be designed to suit the pinholes. When the second connection piece string 22 is lined up linearly, fitting sockets of a predetermined shape are formed between the chuck blocks 244 and 245 of each second connection piece 24 and the lock pin blocks 246 and 247 of the succeeding second connection piece 24. Shapes and positions of the chuck blocks 244 and 245 and lock pin blocks 246 and 247 are determined such that the fitting sockets will substantially coincide in shape with the pinhole blocks 234 and 235 of the first connection piece 23. The pinhole blocks 234 and 235 make up a lock mechanism in conjunction with the chuck blocks 244 and 245 and lock pin blocks 246 and 247. The pinhole blocks 234 and 235 are fitted into the respective fitting sockets when the first and second connection piece strings 21 and 22 are lined up linearly, pressing against each other. In so doing, the lock pins on the lock pin blocks 246 and 247 are inserted into the pinholes in the pinhole blocks 234 and 235, respectively. Consequently, the first connection piece 23 is locked to the second connection piece 24. The locked state is maintained as the pinhole blocks 234 and 235 are fitted into the fitting sockets. As shown in FIG. 11, the first and second connection piece strings 21 and 22 joined with each other as described above form a columnar body having a certain degree of rigidity. The columnar body has a tubular shape with a hollow, substantially square cross section.

Details of the linear gear 239 are described below with reference to FIG. 7.

As shown in FIG. 7, the linear gear 239 is formed on the inner surface (back face) of the first connection piece 23. The linear gear 239 is formed at such a position that a center axis c2 of the linear gear 239 will substantially coincide with a center axis c1 of the first connection piece 23. Note that in the columnar body, the center axis c1 of the first connection piece 23 coincides with the third axis (axis of movement) RA3 of the third joint J3. The linear gear 239 is made up of a plurality of teeth 240 arranged in a row. Of the plurality of teeth 240, a tooth 240e is a leading tooth, a tooth 240f is a rearmost tooth, and teeth 240m are other teeth between the leading tooth and the rearmost tooth. The plurality of teeth 240 has a face width W1 equal to or smaller than a width W0 of the first connection piece 23, and preferably, substantially equal to a face width of teeth of the drive gear 50. The leading tooth 240e and the rearmost tooth 240f (hereinafter referred to as the leading and rearmost teeth 240e and 240f) are provided in such a way as not to overlap each other when viewed along the center axis c1 of the first connection pieces 23. Typically, the leading tooth 240e and the rearmost tooth 240f are equal in face width, but differs in center position (hereinafter simply referred to as the position) in the width direction. The leading tooth 240e and the rearmost tooth 240f differ in face width and position from the other teeth 240m located between the leading and rearmost teeth 240e and 240f. As shown in FIG. 7, the leading and rearmost teeth 240e and 240f have face widths W3 and W2 approximately 1/2 the face width of the other teeth 240m. The leading tooth 240e is offset to one side in the width direction and the rearmost tooth 240f is offset to the opposite side. That is, the leading and rearmost teeth 240e and 240f are separated in a face width direction. Preferably, one end of the leading tooth 240e is aligned with one end of the other teeth 240m and another end of the rearmost tooth 240f is aligned with another end of the other teeth 240m.

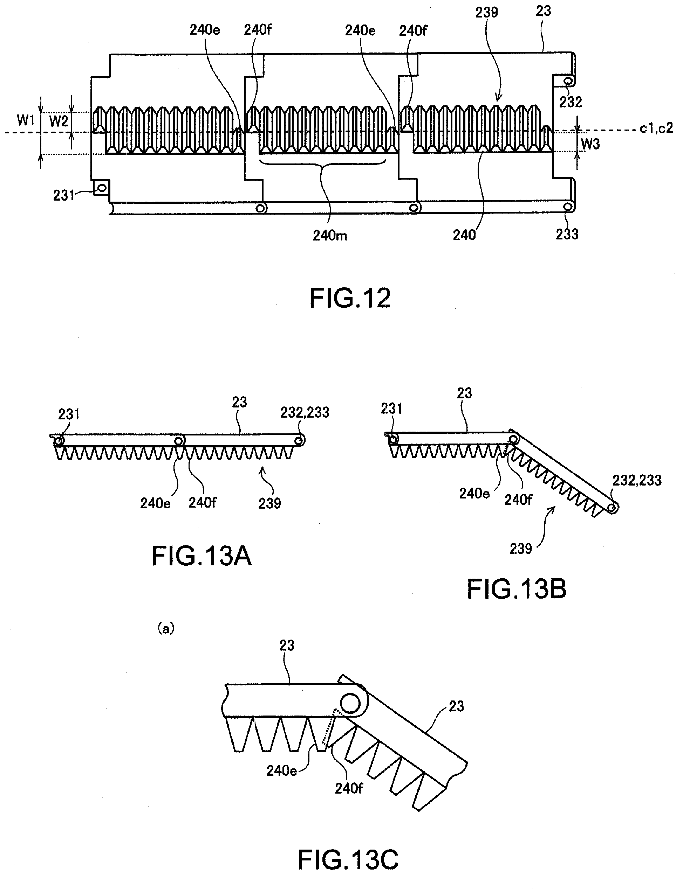

FIG. 12 is a perspective view showing a characteristic structure of the linear gears on the first connection piece string 21 of the robot arm mechanism according to the present embodiment. FIGs. 13A to 13C are side views showing postures of the first connection piece string 21 of FIG. 12 before and after bending. FIG. 13A shows the first connection piece string 21 lined up linearly and FIG. 13B shows the first connection piece string 21 in a bent state. FIG. 13C is an enlarged diagram showing a bent portion of FIG. 13B.

The linear gear 239 is formed on the inner surface of each of the plurality of the first connection pieces 23 making up the first connection piece string 21. As described above, of the plurality of teeth 240 making up the linear gear 239, the leading and rearmost teeth 240e and 240f are provided in such a way as not to overlap each other when viewed along the center axis c1 of the first connection pieces 23. For example, the leading and rearmost teeth 240e and 240f have face widths W3 and W2 approximately 1/2 the face width of the other teeth 240m. One end of the leading tooth 240e is aligned with one end of the other teeth 240m and another end of the rearmost tooth 240f is aligned with another end of the other teeth 240m.

When each pair of successive first connection pieces 23 are lined up linearly, the respective linear gears 239 are connected linearly, making up a rack. The linear gear 239 formed on each of the first connection pieces 23 according to the present embodiment is identical. Therefore, the leading tooth 240e of the linear gear 239 is the succeeding one of gear-end teeth located adjacent to each other across a junction between adjacent first connection pieces 21. Similarly, the rearmost tooth 240f of the linear gear 239 is the preceding one of the gear-end teeth located adjacent to each other across a junction between adjacent first connection pieces 21. Hereinafter, the leading and rearmost teeth 240f and 240e located adjacent to each other across the junction between adjacent first connection pieces 21 will be referred to simply as opposing gear-end teeth 240f and 240e. That is, the opposing gear-end teeth 240f and 240e are provided in such a way as not to overlap each other when viewed along the center axis c1 of the first connection pieces 23. For example, the opposing gear-end teeth 240f and 240e have the face widths W2 and W3 approximately 1/2 the face width of the other teeth 240m. One end of the preceding tooth 240f is aligned with one end of the other teeth 240m and the other end of the succeeding tooth 240e is aligned with the other end of the other teeth 240m. That is, the opposing gear-end teeth 240f and 240e are placed by being offset in the face width direction. Note that preferably, the other teeth 240m have a face width W1 substantially equal to the teeth of the drive gear 50. Therefore, the opposing gear-end teeth 240f and 240e, which have the face widths W2 and W3 approximately 1/2 the face width of the other teeth 240m, can get engaged with the drive gear 50.

With the above-described structure of the linear gear 239 on the inner surface of the first connection piece string 21, the opposing gear-end teeth 240f and 240e do not overlap each other when viewed along the center axis c1 of the first connection pieces 23 (first connection piece string 21). As shown in FIGs. 13B and 13C, when the first connection piece string 21 is bent inward, the opposing gear-end teeth 240f and 240e, which are positionally offset from each other to avoid collision, are not restricted from bending inward. The opposing gear-end teeth 240f and 240e have the same cross sectional shape, depth, and spacing as the other teeth 240m and form a successive arrangement, and thus the opposing gear-end teeth 240f and 240e and the other teeth 240m can mesh seamlessly with the drive gear 50. Therefore, even with the structure of the linear gear 239 on the inner surface of the first connection piece string 21 according to the present embodiment, the drive gear 50 can still send out and pull back the first connection piece string 21. Consequently, as shown in FIG. 3, the first connection piece string 21 can change its posture from a vertical posture in which the first connection piece string 21 is stored in the first support body 11a to a horizontal posture by bending inward. Thus, the linear extension and retraction mechanism according to the present embodiment can improve movement characteristics of the arm section 2.

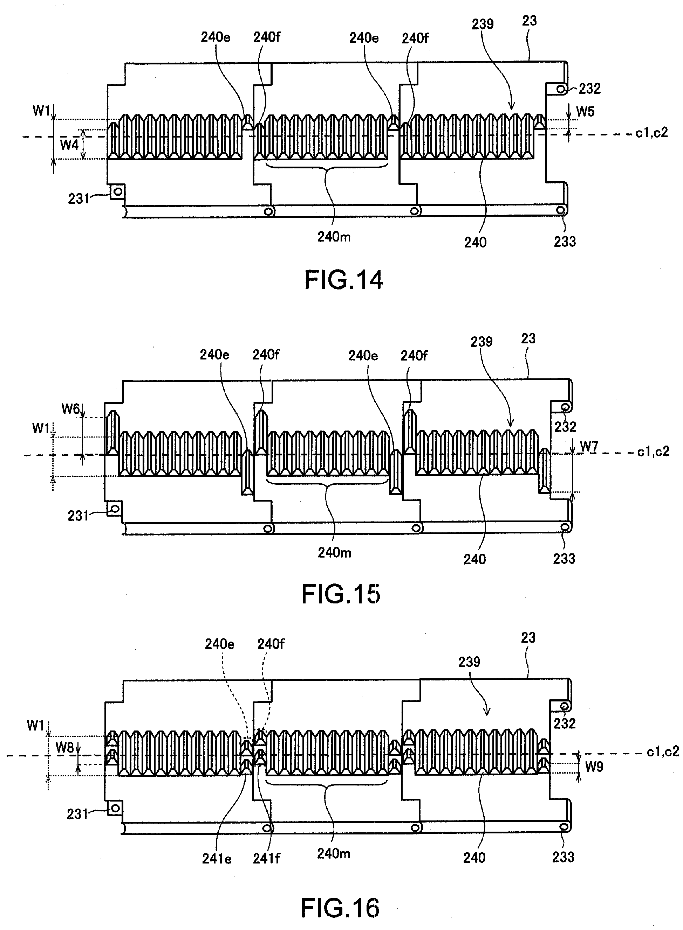

Note that the structure of the linear gear 239 is not limited to the structure according to the present embodiment as long as the opposing gear-end teeth 240f and 240e do not interfere with each other in the bent state of the first connection piece string 21. Specifically, it is sufficient that the opposing gear-end teeth 240f and 240e are provided at such positions as to be able to get engaged with the teeth of the drive gear 50 in such a way as not to overlap each other when viewed along the center axis c1 of the first connection piece string 21. Other structures of the linear gear 239 are described with reference to FIGs. 14 to 19.

### (First variation)

FIG. 14 is a perspective view of the first connection piece string 21 showing a structure of a first variation of the linear gears 239 of FIG. 12. As long as a total of a face width W4 of the preceding tooth 240f and a face width W5 of the succeeding tooth 240e is substantially equal to the face width W1 of the other teeth 240m, a ratio between the face width W4 of the preceding tooth 240f and the face width W5 of the succeeding tooth 240e does not have to be 1:1. For example, as shown in FIG. 14, the ratio between the face width W4 of the preceding tooth 240f and the face width W5 of the succeeding tooth 240e may be 2:1. One end of the preceding tooth 240f is aligned with one end of the other teeth 240m and the other end of the succeeding tooth 240e is aligned with the other end of the other teeth 240m. In the linear gears 239 according to the first variation, the opposing gear-end teeth 240f and 240e are provided at such positions as to be able to get engaged with the teeth of the drive gear 50 in such a way as not to overlap each other when viewed along the center axis c1 of the first connection piece string 21. Consequently, advantages similar to those of the above embodiment are available.

### (Second variation)

FIG. 15 is a perspective view of the first connection piece string 21 showing a structure of a second variation of the linear gears 239 of FIG. 12. A total of a face width W6 of the preceding tooth 240f and a face width W7 of the succeeding tooth 240e does not have to be substantially equal to the face width W1 of the other teeth 240m. For example, as shown in FIG. 15, the opposing gear-end teeth 240f and 240e have face widths W6 and W7 substantially equal to the face width W1 of the other teeth 240m. That is, the total of the face width W6 of the preceding tooth 240f and the face width W7 of the succeeding tooth 240e is substantially equal to twice the face width W1 of the other teeth 240m. The opposing gear-end teeth 240f and 240e are provided at locations different from the other teeth 240m. Specifically, the preceding tooth 240f is provided by being offset in one direction along the face width direction while the succeeding tooth 240e is provided by being offset in the other direction along the face width direction. An offset distance is equivalent to approximately 1/2 the face width W1 of the other teeth 240m. In the linear gears 239 according to the second variation described above, the opposing gear-end teeth 240f and 240e are provided at such positions as to be able to get engaged with the teeth of the drive gear 50 in such a way as not to overlap each other when viewed along the center axis c1 of the first connection piece string 21. Consequently, advantages similar to those of the above embodiment are available.

### (Third variation)

FIG. 16 is a perspective view of the first connection piece string 21 showing a structure of a third variation of the linear gears 239 of FIG. 12. The opposing gear-end teeth 240f and 240e may be made up of a plurality of tooth segments 241f and 241e. For example, as shown in FIG. 16, the preceding tooth 240f has a plurality of--two in this case--tooth segments 241f. Similarly, the succeeding tooth 240e has a plurality of--two in this case--tooth segments 241e. Each of the plurality of tooth segments 241f has a face width W8 approximately 1/4 the face width W1 of the other teeth 240m. Similarly, each of the plurality of tooth segments 241e has a face width W9 approximately 1/4 the face width W1 of the other teeth 240m. The plurality of--four in this case--tooth segments making up the opposing gear-end teeth 240f and 240e are separated in the face width direction. Specifically, of the two tooth segments 241f making up the preceding tooth 240f, one end of one of the tooth segments 241f is aligned with one end of the other teeth 240m. The other tooth segment 241f is separated from the other end of one of the tooth segments 241f by a distance equivalent to approximately 1/4 the face width W1 of the other teeth 240m. Of the two tooth segments 241e making up the succeeding tooth 240e, the other end of one of the tooth segments 241e is aligned with the other end of the other teeth 240m. The other tooth segment 241e is separated from one end of one of the tooth segments 241e by a distance equivalent to approximately 1/4 the face width W1 of the other teeth 240m. In the linear gears 239 according to the third variation described above, the opposing gear-end teeth 240f and 240e are provided at such positions as to be able to get engaged with the teeth of the drive gear 50 in such a way as not to overlap each other when viewed along the center axis c1 of the first connection piece string 21. Consequently, advantages similar to those of the above embodiment are available.

### (Fourth variation)

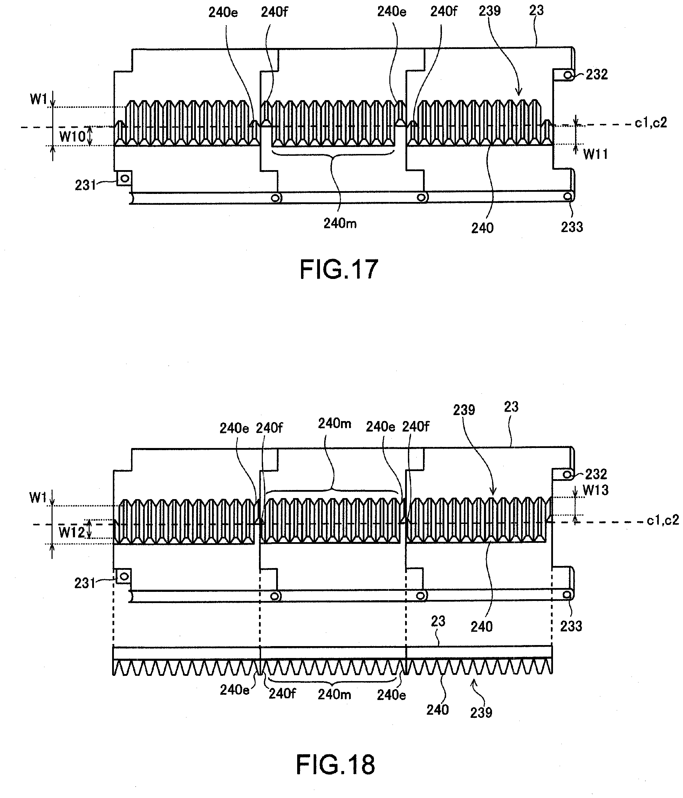

FIG. 17 is a perspective view of the first connection piece string 21 showing a structure of a fourth variation of the linear gears 239 of FIG. 12. The linear gears 239 formed on two adjacent first connection pieces 23 do not have to be identical. For example, as shown in FIG. 17, of the two adjacent first connection pieces 23, the leading and rearmost teeth 240e and 240f of one of the first connection pieces 23 have a face width W10 approximately 1/2 the face width W1 of the other teeth 240m. The leading and rearmost teeth 240e and 240f of one of the first connection pieces 23 are aligned at one end with one end of the other teeth 240m. Of the two adjacent first connection pieces 23, the leading and rearmost teeth 240e and 240f of the other first connection pieces 23 have a face width W11 approximately 1/2 the face width W1 of the other teeth 240m. The other ends of the leading and rearmost teeth 240e and 240f of the other first connection pieces 23 are aligned with the other end of the other teeth 240m. As described above, in the first connection piece string 21 according to the fourth variation, the opposing gear-end teeth 240f and 240e located adjacent to each other across the junction between adjacent first connection pieces 21 are provided at such positions as to be able to get engaged with the teeth of the drive gear 50 in such a way as not to overlap each other when viewed along the center axis c1 of the first connection piece string 21. Consequently, advantages similar to those of the above embodiment are available.

### (Fifth variation)

FIG. 18 is a perspective view of the first connection piece string 21 showing a structure of a fifth variation of the linear gears 239 of FIG. 12. The opposing gear-end teeth 240f and 240e described so far have the same tooth tip as the other teeth 240m. However, the tooth tips of the opposing gear-end teeth 240f and 240e does not need to have the same shape as the tooth tips of the other teeth 240m as long as the opposing gear-end teeth 240f and 240e can be engaged with the drive gear 50. For example, as shown in FIG. 18, the opposing gear-end teeth 240f and 240e have face widths W12 and W13 approximately 1/2 the face width W1 of the other teeth 240m. One end of the preceding tooth 240f is aligned with one end of the other teeth 240m and the other end of the succeeding tooth 240e is aligned with the other end of the other teeth 240m. The preceding tooth 240f and the succeeding tooth 240e together form the same cross sectional shape as the tooth tip of the other teeth 240m. Specifically, the preceding tooth 240f has the same shape as a front half of the tooth tip of the other teeth 240m. The succeeding tooth 240e has the same shape as a rear half of the tooth tip of the other teeth 240m. When used alone, the preceding tooth 240f does not function as a tooth. Similarly, the succeeding tooth 240e does not function as a tooth when used alone. However, when used in combination, the opposing gear-end teeth 240f and 240e can function as a tooth. For example, when the drive gear 50 rotates forward, the preceding tooth 240f meshes with a tooth of the drive gear 50, sending out the first connection piece string 21. When the drive gear 50 rotates backward, the succeeding tooth 240e meshes with a tooth of the drive gear 50, pulling back the first connection piece string 21. In the linear gears 239 according to the fifth variation described above, the opposing gear-end teeth 240f and 240e can get engaged with the drive gear 50 and are provided in such a way as not to overlap each other when viewed along the center axis c1 of the first connection piece string 21. Consequently, advantages similar to those of the above embodiment are available.

### (Sixth variation)

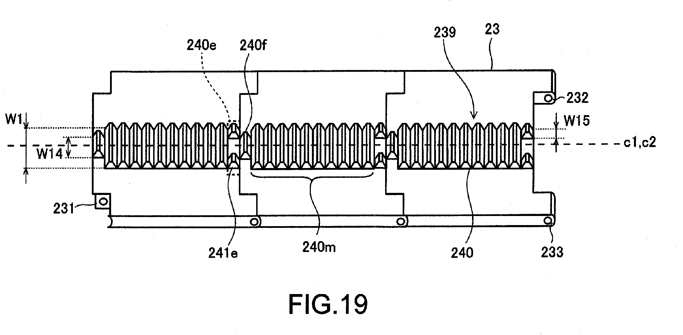

FIG. 19 is a perspective view of the first connection piece string 21 showing a structure of a sixth variation of the linear gears 239 of FIG. 12. The opposing gear-end teeth 240f and 240e may be configured by combining the structures of the opposing gear-end teeth 240f and 240e described in the first to fifth variations. For example, as shown in FIG. 19, only the succeeding tooth 240e is made up of a plurality of--two in this case--tooth segments 241e. The preceding tooth 240f has a face width W14 approximately 1/2 the face width W1 of the other teeth 240m. The plurality of tooth segments 241e making up the succeeding tooth 240e have a face width W15 approximately 1/4 the face width W1 of the other teeth 240m. The preceding tooth 240f and the succeeding tooth 240e are separated in the face width direction. Specifically, the preceding tooth 240f is aligned with a widthwise center location of the first connection pieces 23. Of the two tooth segments 241e making up the succeeding tooth 240e, one end of one of the tooth segments 241e is aligned with one end of the other teeth 240m. The other end of the other tooth segment 241e is aligned with the other end of the other teeth 240m. That is, the other tooth segment 241e is separated from one of the tooth segments 241e by a distance approximately 1/2 the face width W1 of the other teeth 240m. In the linear gears 239 according to the sixth variation described above, the opposing gear-end teeth 240f and 240e are provided at such positions as to be able to get engaged with the teeth of the drive gear 50 in such a way as not to overlap each other when viewed along the center axis c1 of the first connection piece string 21. Consequently, advantages similar to those of the above embodiment are available.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

### REFERENCE SIGNS LIST

1...base, 2...arm section, 3...end effector, J1, J2, J4, J5, J6...rotary joint, J3...linear motion joint, 11a...first support body, 11b...second support body, 11c...third support body, 21...first connection piece string, 22...second connection piece string, 23...first connection piece, 239...linear gear, 24...second connection piece, 240...teeth, 240e...succeeding tooth (leading teeth), 240f...preceding tooth (rearmost teeth), 240m...other teeth, 241e, 241f...tooth segment, 26...head piece, 30...ejection section, 40...guide roller, 50...drive gear, 55...motor

## Claims

1. A linear extension and retraction mechanism comprising: a first connection piece string, the first connection piece string including a plurality of first connection pieces coupled together bendably in a row, a linear gear consisted of a plurality of teeth arranged in a row being provided on a back face of each of the first connection piece;
a second connection piece string, the second connection piece string including a plurality of second connection pieces coupled together bendably in a row, a foremost one of the plurality of second connection pieces being connected with a foremost one of the plurality of first connection pieces, the first and second connection piece strings being joined with each other to constrain bending, thereby a columnar body being formed, the columnar body being relaxed when the first and second connection piece strings are separated from each other;
an ejection section adapted to join together the first and second connection piece strings and support the columnar body; and
a drive gear adapted to be meshed with the linear gears, wherein
gear-end teeth located adjacent to each other across a junction between adjacent first connection pieces are provided in such a way as not to overlap each other when viewed along a center axis of the columnar body.

2. The linear extension and retraction mechanism according to claim 1, wherein a total face width of the gear-end teeth is substantially equal to a face width of other teeth.

3. The linear extension and retraction mechanism according to claim 2, wherein each of the gear-end teeth has a face width approximately 1/2 the face width of the other teeth.

4. The linear extension and retraction mechanism according to claim 1, wherein the gear-end teeth have a face width substantially equal to a face width of other teeth and are provided at locations different from the other teeth.

5. The linear extension and retraction mechanism according to claim 1, wherein each of the gear-end teeth is consisted of a plurality of tooth segments and the plurality of tooth segments are separated in a width direction.

6. The linear extension and retraction mechanism according to claim 1, wherein the linear gears have a center axis which substantially coincides with a center axis of the first connection pieces and have a width smaller than a width of the first connection pieces.

7. The linear extension and retraction mechanism according to claim 1, wherein one of the gear-end teeth corresponds to a front half of other teeth and another of the gear-end teeth corresponds to a rear half of the other teeth.

8. A connection piece used for a linear extension and retraction mechanism, wherein:
the connection piece is shaped like a flat plate;
a linear gear is provided on a back face of the connection piece; and
of a plurality of teeth making up the linear gear, a leading tooth and a rearmost tooth are provided in such a way as not to overlap each other when viewed along a center axis of the connection piece.

9. A robot arm mechanism equipped with a linear extension and retraction mechanism, the linear extension and retraction mechanism comprising:
a first connection piece string, the first connection piece string including a plurality of first connection pieces coupled together bendably in a row, a linear gear consisted of a plurality of teeth arranged in a row being provided on a back face of each of the first connection piece;
a second connection piece string, the second connection piece string including of a plurality of second connection pieces coupled together bendably in a row, a foremost one of the plurality of second connection pieces being connected with a foremost one of the plurality of first connection pieces, the first and second connection piece strings being joined with each other to constrain bending, thereby a columnar body being formed, the columnar body being relaxed when the first and second connection piece strings are separated from each other;
an ejection section adapted to form the columnar body by joining together the first and second connection piece strings and support the columnar body; and
a drive gear adapted to be meshed with the linear gears, wherein
gear-end teeth located adjacent to each other across a junction between adjacent first connection pieces are provided in such a way as not to overlap each other when viewed along a center axis of the columnar body.
